# EUROPEAN PATENT SPECIFICATION

(11) **EP 2 008 979 B1**
(45) Date of publication and mention of the grant of the patent: **15.09.2010**
(21) Application number: 08011236.0
(22) Date of filing: 20.06.2008
(51) Int. Cl.: C03B 37/018

(54) **A method for manufacturing a preform as well as a method for forming optical fibres from such a preform**
Verfahren zum Herstellen einer Vorform und Verfahren zum Formen von optischen Fasern für eine solche Vorform
Procédé de fabrication d'une préforme et procédé de formation de fibres optiques à partir d'une préforme

(30) Priority: 29.06.2007 NL 1034058
(43) Date of publication of application: 31.12.2008
(73) Proprietor: Draka Comteq B.V., 1083 HJ Amsterdam (NL)
(72) Inventor: Hartsuiker, Johannes Antoon, 5624 KL Eindhoven (NL); Milicevic, Igor, 5707 PW Helmond (NL); Van Stralen, Mattheus Jacobus Nicolaas, 5036 ST Tilburg (NL); Deckers, Rob Hubertus Matheus, 5643 KB Eindhoven (NL); Korsten, Marco, 5658 EV Eindhoven (NL)
(74) Representative: op den Brouw-Sprakel, Vera Stefanie Irene

(56) References cited:
- GB-A- 2 118 165
- US-A1- 2006 193 581

## Description

The present invention relates to a method for manufacturing a preform for optical fibres by means of a vapour deposition process, which method comprises the steps of:
i) providing a hollow glass substrate tube having a supply side and a discharge side,
ii) supplying doped or undoped glass-forming gases to the interior of the hollow substrate tube via the supply side thereof,
iii) creating temperature and plasma conditions in the interior of the hollow substrate tube for effecting the deposition of glass layers on the inner surface of the hollow substrate tube, which deposition is to be regarded as comprising a number of separate phases, each phase having an initial refractive index value and a final refractive index value and comprising the deposition of a number of glass layers, the plasma being moved back and forth along the longitudinal axis of the hollow substrate tube between a reversal point near the supply side and a reversal point near the discharge side of the hollow substrate tube, and possibly
iv) consolidating the tube obtained in step iii) into the preform.

The present invention further relates to a method for forming optical fibres in which an optical preform is heated at one end, from which optical preform the optical fibre is subsequently drawn, as well as to a preform.

Such a method is known per se from Dutch patent NL 1 023 438 in the name of the present applicant.

From British patent publication GB 2 118 165 a method for manufacturing a preform for an optical fibre is known in which the velocity of the heat source axially along the substrate tube is in accordance with a specific mathematical equation, said velocity being a function of the position of said heat source along said tube, so that the total deposition thickness of the glass layers is claimed to be substantially constant along the length of said tube.

From U.S. Pat. No. 5,188,648 granted in the name of the present applicants a method for manufacturing a preform of optical fibres is known in which the movement of the plasma is interrupted each time the plasma reaches the reversal point near the gas inlet point of the substrate tube, whilst the glass deposition continues, which interruption of the plasma movement lasts at least 0.1 seconds.

Using the present invention, preforms for optical fibres are formed by means of an internal chemical vapour deposition technique (CVD), in particular plasma chemical vapour deposition (PCVD), wherein reactive glass-forming gases, possibly doped, are reacted inside a hollow substrate tube, resulting in the deposition of one or more glass layers on the inner surface of the hollow substrate tube. Such reactive gases are supplied on one side of the substrate tube, viz. the supply side, and as a result of the special process conditions they form glass layers on the interior of the substrate tube. An energy source is moved back and forth along the length of the substrate tube for forming the glass layers. The energy source, in particular a plasma generator (resonator), supplies high-frequency energy (microwaves), thereby generating a plasma in the interior of the substrate tube, under which plasma conditions the reactive glass-forming gases will react (the plasma CVD technique). It is also possible, however, to supply the energy in the form of heat, in particular by means of burners, on the outer side of the substrate tube or via a furnace that surrounds the substrate tube. The aforesaid techniques have this in common, that the energy source is moved back and forth with respect to the substrate tube.

During the aforesaid deposition process, in which one or more glass layers are deposited on the inner surface of hollow substrate tube, such glass layers will generally have different properties. In particular, the difference between the deposition of one phase and the deposition of the other face can be perceived as a difference in the refractive index value between the two phases. The refractive index values need not differ from each other in all situations, however. The fact is that it has also appeared to be possible to deposit a number of different glass types on the interior of the substrate tube, using different mixtures of germanium and fluor, which different glass layers may nevertheless have exactly the same refractive index values.

After the deposition has been completed, a hollow substrate tube thus formed is consolidated so as to obtain a solid preform. A primary preform, which usually has a diameter of about 2-4 cm, is provided with an additional glass layer in an additional process step. For single-mode preforms the external diameter will eventually be about 8-12, for multimode preforms this value is about 3-6 cm, after which a glass fibre can be formed from such a preform. The present inventors have found that gas bubbles may form on the interface between two different deposition phases during such a collapsing process. Such gas bubbles adversely affect the quality of the solid preform thus obtained, in which connection in particular layer cracking and propagation of cracks along the longitudinal axis of the preform during the consolidation step are to be considered. In principle, a solid preform in which gas bubbles are present is not suitable for forming optical fibres therefrom. Said gas bubbles may increase in volume in particular during the manufacture of an optical glass fibre by means of a drawing process, which may lead to fracture of the fibre during said drawing process.

As the present inventors have found, the aforesaid problems occur in particular when the change of the glass composition between two adjacent regions in the preform is significant, in particular when the dopant content differs by at least 5 wt.%, in particular at least 10 wt.%. Especially with germanium, stresses are set up in the adjacent regions.

The object of the present invention is thus to provide a method for manufacturing a preform for optical fibres in which the formation of gas bubbles between the various phases on the interior of the substrate tube is prevented as much as possible.

Another object of the present invention is to provide a hollow substrate tube provided with one or more deposition layers, which hollow substrate tube minimises the formation of bubbles between the individual deposition phases during the consolidation process.

The invention as referred to in the introduction is characterised in that a transition deposition is carried out between the deposition of one phase and the deposition of the other phase in step iii), which transition deposition comprises the gradual changing of the process parameters of one phase into the process parameters of the other phase.

One or more objects of the present invention are accomplished by using such a feature. The present inventors have thus found that the introduction of so-called transition deposition areas or transition regions between two successive deposition phases results in a minimisation of the formation of gas bubbles during the consolidation step iv). The term "deposition phase" is to be understood to mean the deposition of a number of glass layers, wherein, in the embodiment of a single-mode preform, the refractive index value of such a phase is substantially constant at the beginning and the end thereof.

It is in particular preferable to use the aforesaid transition deposition with two successive deposition phases arranged beside each other in the hollow substrate tube, in particular when the adjacent glass layers have significantly different refractive index values (and thus different dopant content values). The present invention is thus not limited to the embodiment in which a transition deposition must be introduced between between the respective phases of step iii), but it also extends to embodiments in which such a transition deposition can be left out between specific deposition phases.

In the phase of the transition deposition in which, according to the present invention, the process parameters of one phase are gradually changed into the process parameters of the other phase, the adjusting of the process parameters takes place during a particular time interval, which time interval is relatively short in comparison with the phases in which glass layers having a specific refractive index value are deposited.

The aforesaid process parameters include the amount of glass-forming gases, the amount of dopants, the composition of the glass-forming gases, the composition of the dopants, the velocity at which the plasma is moved along the longitudinal axis of the hollow substrate tube between the reversal point near the supply side and the reversal point near the discharge side, the plasma power that is used, the pressure inside the hollow substrate tube and the temperature profile across the hollow substrate tube.

In the present invention it is in particular desirable that the process parameters of one phase be changed into the process parameters of the other phase according to a linear pattern during the transition deposition phase.

In a special embodiment of the present invention, the changing of the process parameters of one phase into the process parameters of the other phase during the transition deposition in particular comprises varying the dopant content in the glass-forming gases being supplied at the supply side of the hollow substrate tube. The other process parameters mentioned above may be the same for the phase that precedes the transition deposition as for the phase that follows the respective transition deposition.

The present invention in particular provides for the introduction of a transition deposition between one deposition phase and the other deposition phase in step iii), wherein the duration of the transition deposition is significantly shorter than the duration of the aforesaid one and other deposition phases. In particular, the transition deposition is used for depositing minimally 10 and maximally 200 layers, preferably minimally 30 and maximally 150 layers, in particular minimally 40 and maximally 120 layers. In particular, the transition deposition is carried out for such a period of time that the final refractive index profile has only been adapted so that the final optical properties of the optical fibre obtained from a preform thus manufactured are not adversely affected by such a, slightly adjusted, refractive index profile, which profile is characterised by the presence of one or more transition regions between the individual deposition phases.

The present invention further relates to a method for forming an optical fibre, wherein an optical preform is heated at one end thereof and an optical fibre is drawn from the end that is heated, characterised in that a preform as described above is used.

The present invention further relates to a preform for forming optical fibres by heating one end of the preform and drawing an optical fibre from the end thus heated, which preform has a refractive index profile along the radial axis thereof, the preform being characterised in that the refractive index profile comprises a number of separate phases, each phase having an initial refractive index value and a final refractive index value and comprising a number of glass layers, wherein a transition deposition layer is present between one phase and the other, next phase, the refractive index value of one phase being different from the refractive index value of the other phase, which transition deposition layer exhibits a gradual change from the refractive index value of one phase to the refractive index value of the other phase.

It is in particular desirable that in a preform according to the present invention the thickness of said one or more transition deposition layers (note: measured in the unconsolidated preform) ranges from 0.15-3.15 µm per millimetre, based on the external diameter of the solid preform. The term "solid preform" as used therein is to be understood to mean the final preform from which the optical fibre is drawn, for example a preform obtained after the application of an additional amount of glass on the exterior surface of a glass rod, for example via an overcladding process, or a preform obtained by placing a core rod in a jacket tube.

The transition deposition layer according to the present invention is to be regarded as a composite layer or cladding which comprises an amount of about 10-200 layers. For a single-mode preform, the external diameter is about 120 mm, after any overcladding has taken place, whilst a multimode preform has an external diameter of about 50 mm. As a result of the presence of such a transition deposition layer between two glass layers of different composition, no gas bubbles will form on the interface between the aforesaid glass layers during the collapsing process.

The present invention will be explained in more detail hereinafter by means of a number of examples, in which connection it should be noted, however, that the present invention is by no means limited to such special examples.
Figure 1 schematically shows the refractive index profile of a solid preform.
Figure 2 schematically shows the refractive index profile of a solid preform according to the present invention.
Figure 3 schematically shows a refractive index profile having a trapezoidal shape.

### Comparative Example

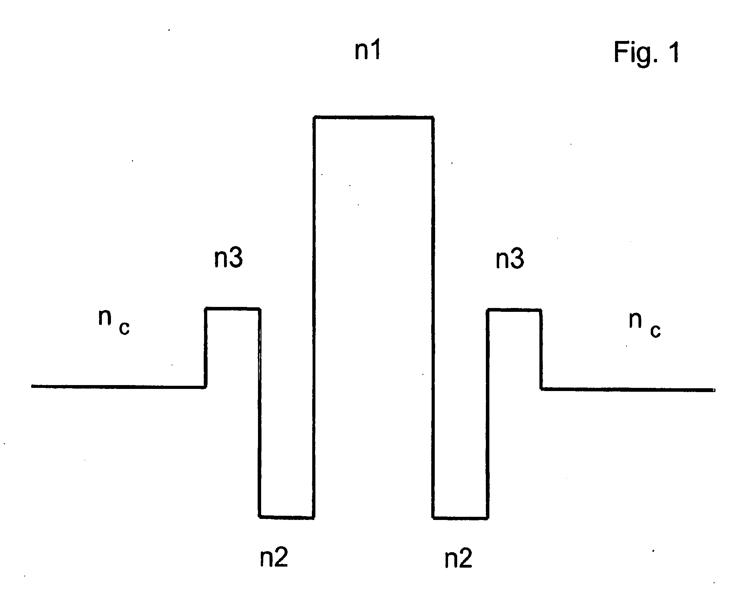

A hollow substrate tube of quartz was manufactured by means of a standard PCVD process as known from Dutch patent NL 1 023 438. A substrate tube thus obtained, internally provided with a number of glass layers, was subjected to a consolidation process so as to obtain a solid preform. Figure 1 schematically shows the refractive index profile of a preform thus formed, obtained by means of a so-called preform analyser (PK 2600). The temperature of the furnace surrounding the substrate tube during the deposition process, in which furnace a resonator is also present, was 1000 °C. During the deposition process the resonator was moved back and forth along the length of the hollow substrate tube between a reversal point near the supply side and a reversal point near the discharge side of the hollow substrate tube. The plasma power was constant, and the deposition was carried out at a deposition rate of about 3 g/min, based on SiO₂. The pressure in the hollow substrate tube during the deposition process was about 10 mbar, with the velocity of the resonator being set at a value between 10 and 30 m/min. The deposition thus carried out can be regarded as consisting of four separate deposition phases.

### Example

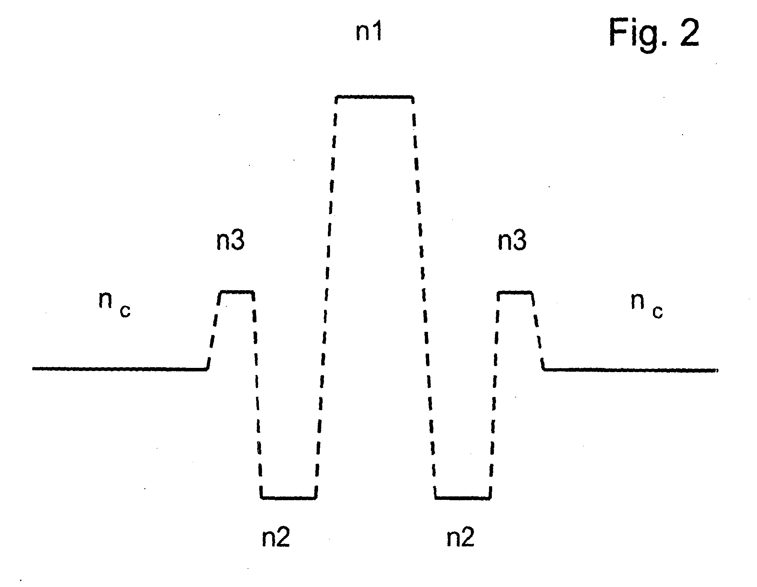

A substrate tube identical to the one used in the Comparative Example was subjected to the same deposition process, except that a transition deposition as introduced between the deposition phases. These transition depositions are characterised by the linear changing of the process parameters of one phase into the process parameters of the other phase. Said transition depositions each comprise about 100 layers. The deposition thus carried out can be regarded as consisting of four separate deposition phases (Phase 1, Phase 3, Phase 5 and Phase 7), separated from each other by respective transition phases (Phase 2, Phase 4 and Phase 6). The total deposition process is schematically shown in the appended Table, in which four deposition phases are separated from each other by respective transition phases. In deposition phase 1, 2090 layers were deposited during a period of about 147 minutes, which Phase 1 was followed by a transition phase, in particular Phase 2, in which the delivery of GeCl₄ was increased from 0 to 5 for 7 minutes, whilst the amount of C₂F₆ was decreased from 74 to 28 in the same period. The velocities of the other gases, viz. SiCl₄ and O₂, were maintained at a constant value during the transition phase. After the aforesaid transition phase, a deposition phase 3 was started, in which an amount of 2000 layers were deposited during a period of about 149 minutes. After completion of Phase 3 a transition phase, in particular Phase 4, was started, during which only the delivery of oxygen was maintained at a constant value, whilst that of the other gases was adapted for 7 minutes. After completion of Phase 4, deposition phase 5 was started, in the course of which Phase 5 2520 layers were deposited during a period of about 182 minutes. Following on deposition phase 5, a transition phase, in particular Phase 6, was started, with all the gas velocities being adapted in this case, which transition phase took up a period of 4 minutes. To conclude, a final deposition phase 7 was carried out, in which 790 layers were deposited during a period of about 49 minutes, during which period also the furnace temperature was decreased. It is in particular preferable if the change of the process conditions that is effected during the transition phase is a linear change. After the aforesaid PCVD process, the substrate tube thus obtained was consolidated into a solid preform. Figure 2 schematically shows the refractive index profile of the preform (single-mode) thus made as obtained by means of a so-called preform analyser (PK 2600). The process pressure and the plasma power were constant during the entire deposition process.

The preform manufactured according to the Comparative Example exhibited gas bubble formation between a number of deposition phases during the consolidation treatment, whereas the preform manufactured according to the present Example did not exhibit gas bubble formation on the interfaces between the various deposition phases during the consolidation process, which result was attributed to the presence of a so-called transition deposition between one phase and the other phase by the present inventors.

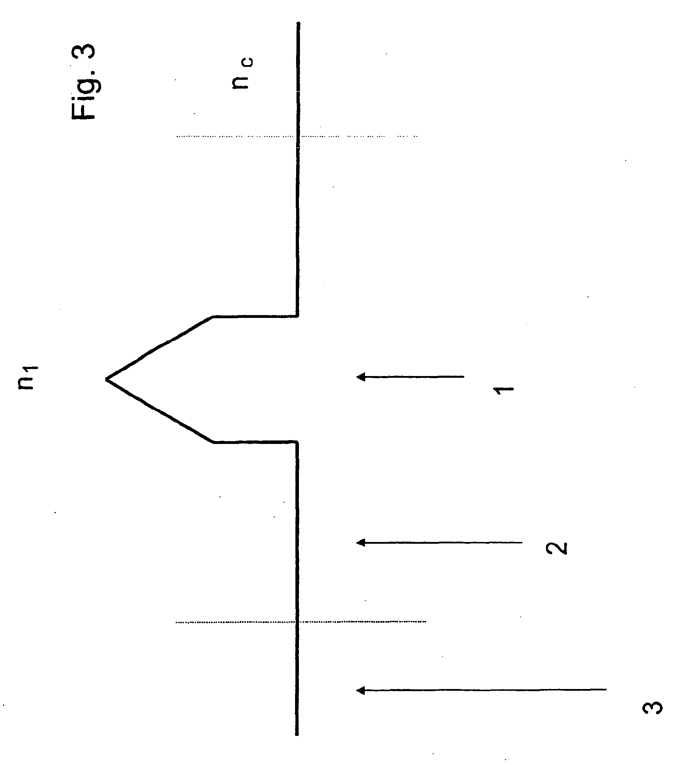

It should be noted that the present transition deposition must not be confused with a refractive index profile as shown in figure 3, in which the central portion 1 has a so-called trapezoidal shape, which trapezoidal shape is used with a view to obtaining special propagation characteristics and which comprises a number of glass layers in the order of the amount of glass layers used for obtaining the cladding portion indicated at 2. The substrate tube itself is indicated at 3. The amount of glass layers deposited on the interior of the hollow substrate tube during the present transition deposition is significantly lower than the amount of glass layers deposited during the entire deposition according to step iii). In other words, the period of time during which the transition deposition is carried out is significantly shorter that the period of time during which the deposition takes place.

**Table**

| Process parameter | Phase 1 | Phase 2 Transition phase | | Phase 3 | Phase 4 Transition phase | | Phase 5 | Phase 6 Transition phase | | Phase 7 |
|---|---|---|---|---|---|---|---|---|---|---|
| | | | | | | | | | | |
| Number of layers [-] | 2090 | 100 | | 2000 | 100 | | 2520 | 60 | | 790 |
| Time [min] | 147 | 7 | | 149 | 7 | | 182 | 4 | | 49 |
| | | Beginning | End | | Beginning | End | | Beginning | End | |
| SiCl₄ Flow [au] | 33 | 33 | 33 | 33 | 33 | 32 | 32 | 32 | 31 | 31 |
| O₂ Flow [au] | 41 | 41 | 41 | 41 | 41 | 41 | 41 | 41 | 38 | 38 |
| GeCl₄ Flow [au] | 0 | 0 | 5 | 5 | 5 | 19 | 19 | 19 | 30 | 30 |
| C₂F₆ Flow [au] | 74 | 74 | 28 | 28 | 28 | 60 | 60 | 60 | 20 | 20 |
| Plasma velocity (resonator) [au] | 1 | 1 | 1 | 1 | 1 | 1 | 1 | 1 | 1,15 | 1,15 |
| Furnace temperature | 1077 | 1077 | 1077 | 1077 | 1077 | 1077 | 1077 | 1077 | 997 | 997 |
| Process pressure [mbar] | 10 | 10 | 10 | 10 | 10 | 10 | 10 | 10 | 10 | 10 |
| Plasma power [kW] | 9 | 9 | 9 | 9 | 9 | 9 | 9 | 9 | 9 | 9 |

## Claims

1. A method for manufacturing a preform for optical fibres by means of a vapour deposition process, which method comprises the steps of:
I) providing a hollow glass substrate tube (3) having a supply side and a discharge side,
II) supplyinp doped or undoped glass-forming gases to the interior of the hollow substrate tube (3) via the supply side thereof,
III) creating temperature and plasma conditions In the interior of the hollow substrate tube (3) for effecting the deposition of glass layers (1,2) on the Inner surface of the hollow substrate tube (3) under such process parameters, which deposition is to be regarded as comprising a number of separate phases, each phase having an initial refractive index value and a final refractive index value and comprising the deposition of a number of glass layers (1,2) on the inner surface of the hollow substrate tube (3), the plasma bering moved back and forth along the longitudinal axis of the hollow substrate tube (3) between a reversal point near the supply side and a reversal point near the discharge side of the hollow substrate tube, and possibly
iv) consolidating the tube (3) obtained in step iii) into the preform, **characterised in that** a transition deposition is carried out between the deposition of one phase and the deposition of the other phase In step iii), which transition deposition comprises the gradual changing of the process parameters of one phase into the process parameters of the other phase.

2. A method according to claim 1, **characterised in that** the transition deposition is used with two successive deposition phases arranged beside each other In the interior of the hollow substrate tube (3).

3. A method according to any one or more of the preceding claims, **characterised in that** the process parameters are selected from the group consisting of the supplied amount of doped or undoped glass-forming gases, the composition of said doped or undoped glass-forming gases, the velocity of movement of the plasma, the plasma power that is used, the prevailing pressure in the interior of the hollow substrate tube (3) and the temperature profile across the hollow substrate tube (3).

4. A method according to any one or more of the preceding claims, **characterised in that** the process parameters of one phase are changed linearly Into the process parameters of the other phase during the transition deposition.

5. A method according to any one or more of the preceding claims, **characterised in that** minimally 10 layers and maximally 200 layers are deposited on the interior of the hollow substrate tube (3) during the transition deposition.

6. A method according to claim 5, **characterised in that** minimally 30 layers and maximally 150 layers are deposited on the interior of the hollow substrate tube during the transition deposition.

7. A method according to claim 6, **characterised in that** minimally 40 layers and maximally 120 layers are deposited on the interior of the hollow substrate tube (3) during the transition deposition.

8. A method for forming an optical fibre, wherein an optical preform is heated at one end, from which optical preform the optical fibre is subsequently drawn, **characterised in that** a preform obtained according to any one or more of the claims 1-7 is used.

9. A preform for forming optical fibres by heating one end of the preform and drawing an optical fibre from the end thus heated, which preform has a refractive index profile along the radial axis thereof, **characterised in that** the refractive index profile comprises a number of separate phases, each phase having an initial refractive index value and a final refractive index value and comprising a number of glass layers (1,2) wherein a transition deposition layer is present between one phase and the next phase, the refractive Index value of one phase being different from the refractive index value of the other phase, which transition deposition layer exhibits a gradual change from the refractive Index value of one phase to the refractive index value of the other phase.

10. A preform according to claim 9, **characterised in that** the thickness of the transition deposition layer ranges from 0.15-3.5 µm per millimetre, based on the external diameter of the solid preform.

11. A preform according to any one or more of the claims 9-10, **characterised in that** the transition deposition layer is free from gas bubbles.

## Patentansprüche

1. Verfahren zum Herstellen einer Vorform für optische Fasern durch einen Gasphasenabscheidungsprozess, wobei das Verfahren die Schritte umfasst:
i) Bereitstellen eines hohlen Glassubstratrohrs (3) mit einer Zufuhrseite und einer Abfuhrseite,
ii) Zuführen von dotierten oder undotierten glasbildenden Gasen in das Innere des hohlen Substratrohrs (3) über die Zufuhrseite desselben,
iii) Erzeugen von Temperatur- und Plasmabedingungen in dem Inneren des hohlen Substratrohrs (3) zum Herbeiführen der Abscheidung von Glasschichten (1, 2) an der Innenfläche des hohlen Substratrohrs (3) unter derartigen Prozessparametern, wobei die Abscheidung so zu betrachten ist, dass sie eine Anzahl von separaten Phasen umfasst, wobei jede Phase einen Anfangsbrechungsindexwert und einen Endbrechungsindexwert aufweist und die Abscheidung einer Anzahl von Glasschichten (1, 2) auf der Innenfläche des hohlen Substratrohrs (3) umfasst, wobei das Plasma entlang der Längsachse des hohlen Substratrohrs (3) zwischen einem Umkehrpunkt nahe der Zufuhrseite und einem Umkehrpunkt nahe der Abfuhrseite des hohlen Substratrohrs hin- und herbewegt wird, und gegebenenfalls
iv) Konsolidieren des in Schritt iii) erhaltenen Rohrs (3) in die Vorform, **dadurch gekennzeichnet, dass** eine Übergangsabscheidung zwischen der Abscheidung einer Phase und der Abscheidung der anderen Phase in Schritt iii) durchgeführt wird, wobei die Übergangsabscheidung das allmähliche Ändern der Prozessparameter einer Phase in die Prozessparameter der anderen Phase umfasst.

2. Verfahren nach Anspruch 1, **dadurch gekennzeichnet, dass** die Übergangsabscheidung bei zwei aufeinanderfolgenden Abscheidungsphasen, die in dem Inneren des hohlen Substratrohrs (3) nebeneinander angeordnet sind, verwendet wird.

3. Verfahren nach einem oder mehreren der vorhergehenden Ansprüche, **dadurch gekennzeichnet, dass** die Prozessparameter ausgewählt sind aus der Gruppe bestehend aus der zugeführten Menge von dotierten oder undotierten glasbildenden Gasen, der Zusammensetzung der dotierten oder undotierten glasbildenden Gase, der Bewegungsgeschwindigkeit des Plasmas, der verwendeten Plasmaleistung, dem im Inneren des hohlen Substratrohrs (3) vorherrschenden Druck und dem Temperaturprofil über das hohle Substratrohr (3).

4. Verfahren nach einem oder mehreren der vorhergehenden Ansprüche, **dadurch gekennzeichnet, dass** während der Übergangsabscheidung die Prozessparameter einer Phase linear in die Prozessparameter der anderen Phase geändert werden.

5. Verfahren nach einem oder mehreren der vorhergehenden Ansprüche, **dadurch gekennzeichnet, dass** während der Übergangsabscheidung minimal 10 Schichten und maximal 200 Schichten an der Innenseite des hohlen Substratrohrs (3) abgeschieden werden.

6. Verfahren nach Anspruch 5, **dadurch gekennzeichnet, dass** während der Übergangsabscheidung minimal 30 Schichten und maximal 150 Schichten an der Innenseite des hohlen Substratrohrs abgeschieden werden.

7. Verfahren nach Anspruch 6, **dadurch gekennzeichnet, dass** während der Übergangsabscheidung minimal 40 Schichten und maximal 120 Schichten an der Innenseite des hohlen Substratrohrs (3) abgeschieden werden.

8. Verfahren zum Formen einer optischen Faser, wobei eine optische Vorform an einem Ende erwärmt wird, wobei aus der optischen Vorform anschließend die optische Faser gezogen wird, **dadurch gekennzeichnet, dass** eine nach einem oder mehreren der Ansprüche 1-7 erhaltene Vorform verwendet wird.

9. Vorform zum Formen von optischen Fasern durch Erwärmen eines Endes der Vorform und Ziehen einer optischen Faser aus dem so erwärmten Ende, wobei die Vorform ein Brechungsindexprofil entlang der Radialachse aufweist, **dadurch gekennzeichnet, dass** das Brechungsindexprofil eine Anzahl von separaten Phasen umfasst, wobei jede Phase einen Anfangsbrechungsindexwert und einen Endbrechungsindexwert aufweist und eine Anzahl von Glasschichten (1, 2) umfasst, wobei eine Übergangsabscheidungsschicht zwischen einer Phase und der nächsten Phase vorhanden ist, wobei der Brechungsindexwert einer Phase von dem Brechungsindexwert der anderen Phase verschieden ist, wobei die Übergangsabscheidungsschicht eine allmähliche Änderung von dem Brechungsindexwert einer Phase zu dem Brechungsindexwert der anderen Phase aufweist.

10. Vorform nach Anspruch 9, **dadurch gekennzeichnet, dass** die Dicke der Übergangsabscheidungsschicht von 0,15 bis 3,5 µm pro Millimeter, basierend auf dem Außendurchmesser der festen Vorform, reicht.

11. Vorform nach einem oder mehreren der Ansprüche 9-10, **dadurch gekennzeichnet, dass** die Übergangsabscheidungsschicht frei von Gasblasen ist.

## Revendications

1. Procédé de fabrication d'une préforme pour fibres optiques au moyen d'un processus de dépôt en phase vapeur, lequel procédé comprend les étapes consistant :
i) à approvisionner un tube creux (3) en verre formant substrat ayant un côté d'alimentation et un côté d'évacuation ;
ii) à délivrer des gaz dopés ou non dopés de formation de verre à l'intérieur du tube creux (3) formant substrat via son côté d'alimentation ;
iii) à créer des conditions de température et de plasma à l'intérieur du tube creux (3) formant substrat pour effectuer le dépôt de couches (1, 2) de verre sur la surface intérieure du tube creux (3) formant substrat sous de tels paramètres de processus, lequel dépôt est à considérer comme comprenant un certain nombre de phases distinctes, chaque phase ayant une valeur initiale d'indice de réfraction et une valeur finale d'indice de réfraction et comprenant le dépôt d'un certain nombre de couches (1, 2) de verre sur la surface intérieure du tube creux (3) formant substrat, le plasma se déplaçant en un mouvement de va-et-vient le long de l'axe longitudinal du tube creux (3) formant substrat entre un point d'inversion proche du côté d'alimentation et un point d'inversion proche du côté d'évacuation du tube creux formant substrat ; et éventuellement
iv) à consolider le tube (3) obtenu à l'étape iii) pour donner la préforme, **caractérisé en ce qu'**un dépôt de transition est effectué entre le dépôt d'une première phase et le dépôt d'une autre phase à l'étape iii), lequel dépôt de transition comprend le changement graduel des paramètres de processus d'une phase en les paramètres de processus de l'autre phase.

2. Procédé selon la revendication 1, **caractérisé en ce que** le dépôt de transition est utilisé avec deux phases successives de dépôt disposées l'une à côté de l'autre à l'intérieur du tube creux (3) formant substrat.

3. Procédé selon l'une quelconque ou plusieurs des revendications précédentes, **caractérisé en ce que** les paramètres de processus sont choisis dans le groupe constitué de la quantité délivrée de gaz dopés ou non dopés de formation de verre, de la composition desdits gaz dopés ou non dopés de formation de verre, de la vitesse de déplacement du plasma, de la puissance de plasma qui est utilisée, de la pression qui règne à l'intérieur du tube creux (3) formant substrat et du profil de température le long du tube creux (3) formant substrat.

4. Procédé selon l'une quelconque ou plusieurs des revendications précédentes, **caractérisé en ce que** les paramètres de processus d'une phase sont changés linéairement en les paramètres de processus de l'autre phase durant le dépôt de transition.

5. Procédé selon l'une quelconque ou plusieurs des revendications précédentes, **caractérisé en ce qu'**au moins 10 couches et au plus 200 couches sont déposées à l'intérieur du tube creux (3) formant substrat durant le dépôt de transition.

6. Procédé selon la revendication 5, **caractérisé en ce qu'**au moins 30 couches et au plus 150 couches sont déposées à l'intérieur du tube creux formant substrat durant le dépôt de transition.

7. Procédé selon la revendication 6, **caractérisé en ce qu'**au moins 40 couches et au plus 120 couches sont déposées à l'intérieur du tube creux (3) formant substrat durant le dépôt de transition.

8. Procédé de formation d'une fibre optique, dans lequel une préforme optique est chauffée à une extrémité, à partir de laquelle préforme optique la fibre optique est ensuite étirée, **caractérisé en ce que** l'on utilise une préforme obtenue selon l'une quelconque ou plusieurs des revendications 1 à 7.

9. Préforme destinée à former des fibres optiques en chauffant une extrémité de la préforme et en étirant une fibre optique à partir de l'extrémité ainsi chauffée, laquelle préforme a un certain profil d'indice de réfraction le long de son axe radial, **caractérisée en ce que** le profil d'indice de réfraction comprend un certain nombre de phases distinctes, chaque phase ayant une valeur initiale d'indice de réfraction et une valeur finale d'indice de réfraction et comprenant un certain nombre de couches (1, 2) de verre, dans lequel une couche de dépôt de transition est présente entre une phase et la phase suivante, la valeur d'indice de réfraction d'une phase étant différente de la valeur d'indice de réfraction de l'autre phase, laquelle couche de dépôt de transition présente un changement graduel de la valeur d'indice de réfraction d'une phase en la valeur d'indice de réfraction de l'autre phase.

10. Préforme selon la revendication 9, **caractérisée en ce que** l'épaisseur de la couche de dépôt de transition va de 0,15 à 3,5 µm par millimètre, en se basant sur le diamètre extérieur de la préforme massive.

11. Préforme selon l'une quelconque ou plusieurs des revendications 9 et 10, **caractérisée en ce que** la couche de dépôt de transition est exempte de bulles de gaz.
